# EUROPÄISCHE PATENTSCHRIFT

(11) **EP 1 023 208 B1**
(45) Veröffentlichungstag und Bekanntmachung des Hinweises auf die Patenterteilung: **23.06.2004**
(21) Anmeldenummer: 99926456.7
(22) Anmeldetag: 28.05.1999
(51) Int. Cl.: B60S 1/04

(54) **BEFESTIGUNGSVORRICHTUNG FÜR EINE SCHEIBENWISCHERANLAGE**
FASTENING DEVICE FOR A WINDSCREEN WIPER SYSTEM
DISPOSITIF DE FIXATION POUR SYSTEME D'ESSUIE-GLACE

(30) Priorität: 24.07.1998 DE 19833403
(43) Veröffentlichungstag der Anmeldung: 02.08.2000
(73) Patentinhaber: Valeo Wischersysteme GmbH, 74321 Bietigheim-Bissingen (DE)
(72) Erfinder: EGNER-WALTER, Bruno, D-74076 Heilbronn (DE)
(74) Vertreter: Jahn, Wolf-Diethart
(86) Internationale Anmeldenummer: PCT/EP1999/003696
(87) Internationale Veröffentlichungsnummer: WO 2000/006430

(56) Entgegenhaltungen:
- DE-A- 4 036 367
- FR-A- 1 368 673
- GB-A- 2 228 188

## Beschreibung

Die Erfindung betrifft eine Befestigungsvorrichtung für eine Scheibenwischeranlage für Kraftfahrzeuge, mit den Merkmalen des Oberbegriffs von Anspruch 1.

Eine Befestigungsvorrichtung dieser Art ist aus DE-A-4036367 bekannt. Sie weist einen länglichen, eine Scheibenwischerantriebsvorrichtung aufnehmenden Tragkörper auf, der im Bereich seiner beiden Enden jeweils ein Befestigungsglied trägt, mit deren Hilfe der Tragkörper an einem Teil der Fahrzeugkarosserie befestigbar ist.

Diese Befestigungsglieder sind durch am Tragkörper zueinander parallel und axial gesichert verdrehbar angeordnete und sich in gleicher Richtung erstreckende Schrauben gebildet, die karosserieseitig in Gewindebohrungen einzuschrauben sind.

Diese Art der Befestigung erfordert eine entsprechend teure, spezielle Lagerung und Montage der Schrauben an den Endstücken des Tragkörpers sowie ein Anschrauben der Befestigungsvorrichtung am Fahrzeug, was zeitraubend und damit gleichfalls kostenintensiv ist.

Der Erfindung liegt die Aufgabe zugrunde, eine Befestigungsvorrichtung, die in ihrer baulichen Konzeption derjenigen der im Oberbegriff des Anspruches 1 erläuterten Befestigungsvorrichtung entspricht, sowohl in fertigungstechnischer als auch montagetechnischer Hinsicht wesentlich zu vereinfachen.

Diese Aufgabe wird erfindungsgemäß durch die kennzeichnenden Merkmale des Anspruches 1 gelöst.

Diese Befestigungsvorrichtung ist somit unterhalb einer Windschutzscheibe durch eine verschraubungsfreie Steckverbindung an einer Tragwand od.dgl. Aufnahmeteil einer Karosserie mit einem Handgriff schnell und einfach zu montieren, wobei der sich quer zu den am Tragkörper angeordneten Steckzapfen erstreckende Steckzapfen für die beiden tragkörperfesten Steckzapfen eine Axialsicherung gegen Herauslösen derselben aus ihren Einstecköffnungen bildet.

Die Steckzapfen können an ihrem Träger (Tragkörper; Karosserieaufnahmeteil) in einfacher Weise durch Anschweißen oder durch eine Preß-Paßverbindung starr befestigt sein. Zu deren karosserieseitiger Aufnahme genügen dabei zylindrische Bohrungen, wobei lediglich zwei hiervon zwecks rüttelsicherer Halterung der Befestigungsvorrichtung entsprechend eng toleriert vorzusehen sind.

In diesem Zusammenhang sei darauf verwiesen, daß aus der DE-A-44 136 35 bereits eine Befestigungsvorrichtung bekannt ist, die über drei, auf den Ecken eines Dreiecks liegenden Befestigungspunkten an Karosserieteilen abgestützt ist.

Zwei der Befestigungspunkte sind an der Scheibenwischanlage seitlich angeordnet und mit entsprechenden Befestigungsteilen mit einer Karosserietragwand fest zu verbinden. Der dritte Befestigungspunkt ist gemäß einer bevorzugten Ausführungsform durch ein konstruktiv aufwendiges, anbaubares Halteelement definiert, das eine Gummitülle trägt, in die ein von der Wischeranlage abragendes Halteteil einsteckbar ist.

Auch bei dieser Konstruktion ist somit die Befestigungsvorrichtung nicht durch eine verschraubungsfreie Steckverbindung montierbar.

Bezüglich der erfindungsgemäßen Konstruktion ist dabei eine günstige, karosserieseitige Abstützbasis der Befestigungsvorrichtung durch eine Maßnahme gemäss Anspruch 5 zu erzielen.

Hierbei ergibt sich eine vorteilhafte Anordnung des dritten Steckzapfens nach Anspruch 6 und 7, wodurch sich sowohl ein relativ großer Seitenabstand desselben zum Tragkörper als auch ein günstiger Zapfeneingriff in die ihm zugeordnete Einsteckbohrung erzielen läßt.

Ein fertigungstechnisch bedingter Versatz von Einstecköffnungen oder ggf. auch eine Überbestimmung in der Lage der Befestigungspunkte vermag sich durch eine Maßnahme gemäß Anspruch 8 nicht nachteilig auszuwirken.

Schließlich ist es günstig, zwecks schwingungsmäßiger Abkopplung von untereinander in Eingriff zu bringenden Steckkomponenten die Einstecköffnungen mit einem Dämpfungselement gemäß Anspruch 9 auszustatten.

Weitere Vorteile, Merkmale und Einzelheiten der Erfindung ergeben sich aus den Unteransprüchen und der nachfolgenden Beschreibung, in der ein bevorzugtes Ausführungsbeispiel der Erfindung im Einzelnen anhand der Zeichnung beschrieben wird. Es zeigen:
- Fig. 1:: eine schaubildliche Darstellung einer Befestigungsvorrichtung einer Scheibenwischeranlage, auf die deren Scheibenwischerantriebsvorrichtung vormontiert ist;
- Fig. 1a:: ein Konstruktionsteil der Befestigungsvorrichtung;
- Fig. 2:: eine verkürzt dargestellte Ansicht von zwei der drei karosserieseitigen Befestigungspunkte zur aufsteckbaren Montage der Befestigungsvorrichtung, in Richtung des Pfeiles A der Fig. 3 gesehen;
- Fig. 3:: einen entlang der Linie III-III der Fig. 2 durch einen karosserieseitigen Befestigungspunkt verlaufenden Schnitt, wobei die Steckverbindung eines an diesem Befestigungspunkt gehaltenen Steckzapfens der Befestigungsvorrichtung strichpunktiert eingezeichnet ist.

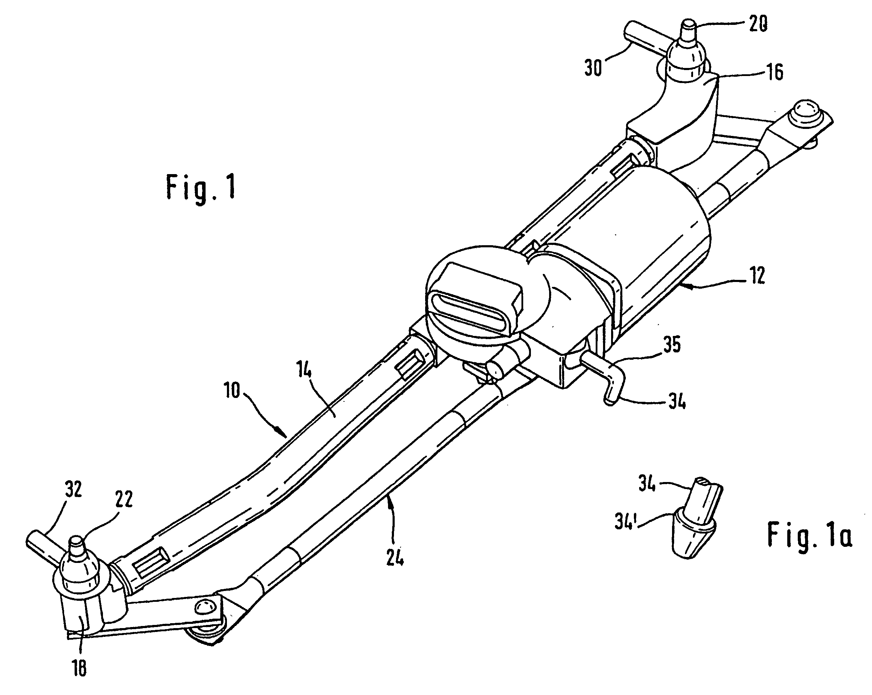

In Fig. 1 bezeichnet 10 als Ganzes einen Teil einer Befestigungsvorrichtung einer Scheibenwischeranlage, auf die eine Scheibenwischerantriebsvorrichtung 12 vormontiert ist. Diese ist beispielsweise für den gleichsinnigen Antrieb zweier Scheibenwischer ausgelegt.

14 bezeichnet einen beispielsweise stangenartig ausgebildeten Tragkörper der Befestigungsvorrichtung 10, der an beiden Enden jeweils einen Lagerkörper 16 bzw. 18 trägt, in denen jeweils eine Wischerwelle 20 bzw. 22 zur Aufnahme eines Scheibenwischers axial gesichert verdrehbar gelagert ist.

Auf dem Tragkörper 14 sitzt ungefähr auf dessen Mittelstück die Scheibenwischerantriebsvorrichtung 12, durch die ein Koppelgestänge 24 zur Drehbewegungssynchronisierung der Wischerwellen 20, 22 betätigbar ist.

Die aus den beiden vormontierten Baugruppen 10, 12 gebildete Baueinheit ist mittels einer verschraubungsfreien Steckverbindung unterhalb einer Windschutzscheibe 26 einer Fahrzeugkarosserie an einer Tragwand 28 oder an adäquaten Karosserieteilen befestigbar. Zu diesem Zweck trägt jeder Lagerkörper 16, 18 einen zylindrischen Steckzapfen 30 bzw. 32, die zueinander parallel und in gleicher Richtung senkrecht zu den Wischerwellen 20, 22 von den Lagerkörpern 16, 18 nach vorne abragen. Ein weiterer, zylindrischer Steckzapfen ist mit 34 bezeichnet und an der vom Tragkörper 14 abgewandten Seite an der Scheibenwischerantriebsvorrichtung 12 starr befestigt. Dieser liegt in einer vertikalen Ebene und erstreckt sich senkrecht zu den beiden Steckzapfen 30, 32, gemäß Fig. 1, vorzugsweise nach unten. Die Steckzapfen 30, 32, 34 liegen damit auf den Eckpunkten eines Dreiecks und bilden eine stabile Abstützbasis.

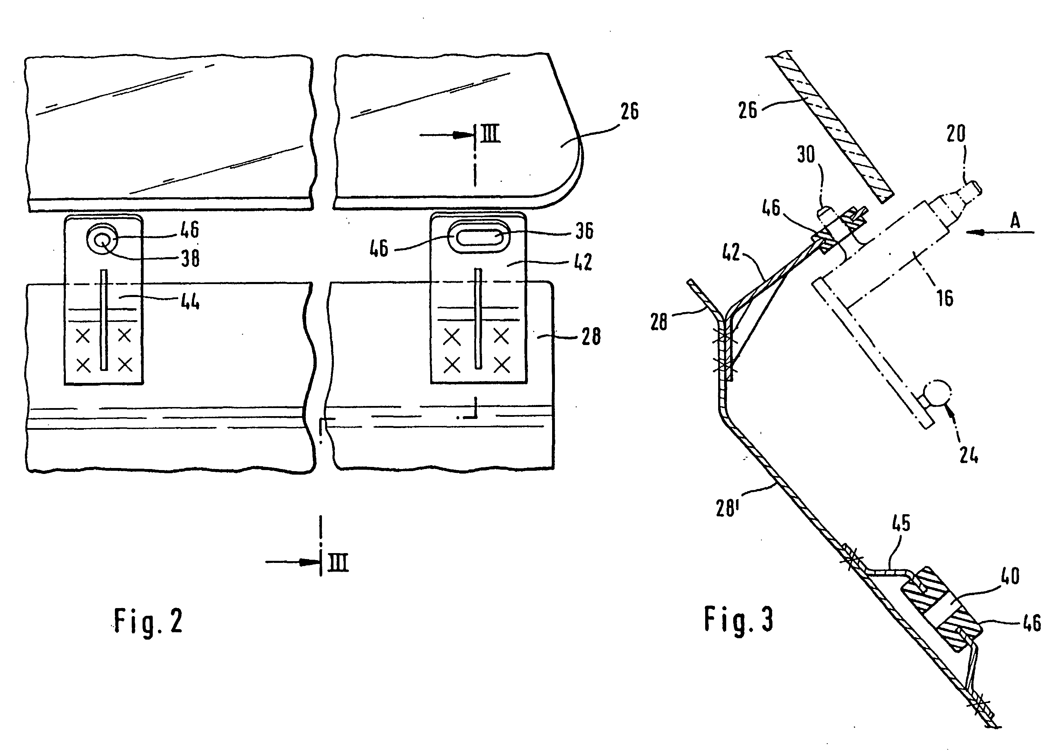

Mit 36, 38 und 40 sind den Steckzapfen 30, 32, 34 karosseriefest zugeordnete Einstecköffnungen bezeichnet (Fig. 2 und 3). Hiervon sind beispielsweise die Einstecköffnungen 36, 38 in jeweils einer von in seitlichem Abstand voneinander auf die Tragwand 28 aufgepunkteten Aufnahmelasche 42 bzw. 44 vorgesehen, während die Einstecköffnung 40, wie Fig. 3 zeigt, unterhalb und etwa in der Mitte zwischen den Aufnahmelaschen 42, 44 der Tragwand 28 an einem beispielsweise ungefähr parallel zur Winschutzscheibe 26 und, in Fahrtrichtung des Kraftfahrzeuges gesehen, schräg nach vorne unten geneigten Wandteil 28' in einem Halter 45 vorgesehen ist.

Um fertigungsbedingte Toleranzen bei der Positionierung der oberen Einstecköffnungen 36, 38 auszugleichen, ist eine derselben, beispielsweise die rechts liegende, als Langloch 36 ausgebildet.

Zur schwingungsmäßigen Abkopplung der vormontierten Baueinheit 10, 12, 24 von der Tragwand 28 sind die Einstecköffnungen 36, 38, 40 in Tüllen 46 aus Gummi oder anderem, geeignetem, elastischem Material vorgesehen, die ihrerseits in entsprechende Durchbrüche der Teile 42, 44, 45 eingeknüpft sind.

Wie Fig. 1 zeigt, ist der Steckzapfen 34 beispielsweise durch das freie Endstück eines rechtwinklig abgebogenen Zylinderstiftes 35 gebildet. Auch jede andere Ausbildung und Anordnung ist denkbar; insbesondere könnte der Steckzapfen 34 auch nach oben gerichtet sein.

Beide möglichen Anordnungen des Steckzapfens 34 stellen sicher, dass die Baueinheit 10, 12, 24, sobald deren Steckzapfen 30, 32, 34 mit den zugeordneten Einstecköffnungen 36, 38, 40 in Eingriff gebracht sind, der Steckzapfen 34 einen Anschlag bildet, durch den eine Axialverlagerung und damit ein Herauslösen der beiden anderen Steckzapfen 30, 32 aus ihren Einstecköffnungen 36; 38 zuverlässig verhindert wird.

Wie Fig. 1a zeigt, kann der Steckzapfen 34 am freien Zapfenende bei 34' verdickt und vorzugsweise konisch ausgebildet sein, um dasselbe in der Tülle 46 durch Verrasten festlegen zu können.

## Patentansprüche

1. Befestigungsvorrichtung (10) für eine Scheibenwischeranlage für Kraftfahrzeuge, mit einem eine Scheibenwischerantriebsvorrichtung (12) tragenden Tragkörper (14), der zwei seitliche, längliche Befestigungsglieder (30, 32) aufweist, die vom Tragkörper (14) in gleicher Richtung quer zu in diesem gelagerten Wischerwellen (20, 22) abragen und die mit jeweils einer karosserieseitigen Aufnahmeöffnung (36 bzw. 38) in Eingriff bringbar sind, **gekennzeichnet durch** wenigstens ein weiteres Befestigungsglied (34), welches zur Verbindungslinie der beiden Befestigungsgliedern (30, 32) beabstandet ist, wobei das dritte Befestigungsglied (34) sich winklig zu der von den beiden ersten Befestigungsgliedern (30, 32) aufgespannten Ebene erstreckt und daß alle Befestigungsglieder Steckelemente, insbesondere Steckzapfen (30, 32, 34) für eine verschraubungsfreie Steckverbindung des Tragkörpers (14) mit der Fahrzeugkarosserie bilden.

2. Befestigungsvorrichtung nach Anspruch 1, **dadurch gekennzeichnet, daß** drei auf den Eckpunkten eines Dreiecks liegende Befestigungsglieder (30, 32, 34) vorgesehen sind.

3. Befestigungsvorrichtung nach Anspruch 1 oder 2, **dadurch gekennzeichnet, daß** ein drittes Befestigungsglied (34) sich senkrecht zu den am Tragkörper (14) vorgesehenen ersten Befestigungsgliedern (30, 32) erstreckt.

4. Befestigungsvorrichtung nach einem der vorhergehenden Ansprüche, **dadurch gekennzeichnet, daß** die beiden Befestigungsgliedern (30, 32) zueinander parallel liegen.

5. Befestigungsvorrichtung nach einem der vorhergehenden Ansprüche, **dadurch gekennzeichnet, daß** der dritte Steckzapfen (34) ungefähr in der Mitte zwischen den beiden tragkörperseitigen Steckzapfen (30, 32) vorgesehen ist.

6. Befestigungsvorrichtung nach einem der vorhergehenden Ansprüche, **dadurch gekennzeichnet, daß** der dritte Steckzapfen (34) an der vom Tragkörper (14) getragenen Scheibenwischerantriebsvorrichtung (12) vorgesehen ist.

7. Befestigungsvorrichtung nach einem der vorhergehenden Ansprüche, **dadurch gekennzeichnet, daß** der dritte Steckzapfen (34), in einer vertikalen Ebene liegend, bezogen auf die zu wischende Windschutzscheibe (26), sich entgegen derselben erstreckt.

8. Befestigungsvorrichtung nach einem der vorhergehenden Ansprüche, **dadurch gekennzeichnet, daß** eine der beiden, den seitlich am Tragkörper (14) vorgesehenen Steckzapfen (30, 32) karosserieseitig zugeordneten Einstecköffnungen als Langloch (36) ausgebildet ist, das in Richtung auf die benachbarte Einstecköffnung (38) seine größere Weite aufweist.

9. Befestigungsvorrichtung nach einem der vorhergehenden Ansprüche, **dadurch gekennzeichnet, daß** die Einstecköffnungen (36, 38, 40) jeweils in einer karosseriefesten Gummitülle (46) vorgesehen sind.

## Claims

1. Fixing device (10) for a screen wiper system for motor vehicles, comprising a supporting body (14) which carries a screen wiper drive device (12) and has two longitudinal side fixing elements (30, 32) which protrude from the supporting body (14) in the same direction transverse to the wiper shafts (20, 22) mounted therein and which can each be brought into engagement with a receiver opening (36 or 38) on the vehicle body side, **characterised by** at least one further fixing element (34) which is spaced from the connecting line of the two fixing elements (30, 32), the third fixing element (34) extending at an angle to the plane spanned by the first two fixing elements (30, 32), and that all fixing elements form push-fit elements in particular push-fit pegs (30, 32, 34) for a screwless push-fit connection of the supporting body (14) with the vehicle body.

2. Fixing device according to claim 1, **characterised in that** three fixing elements (30, 32, 34) are provided at the corners of a triangle.

3. Fixing device according to claim 1 or 2, **characterised in that** a third fixing element (34) extends perpendicular to the first fixing elements (30, 32) provided on the supporting body (14).

4. Fixing device according to any of the preceding claims, **characterised in that** the two fixing elements (30, 32) are placed parallel with regard to each other.

5. Fixing device according to any of the preceding claims, **characterised in that** the third push-fit peg (34) is provided approximately in the middle between the two push-fit pegs (30, 32) on the supporting body side.

6. Fixing device according to any of the preceding claims, **characterised in that** the third push-fit peg (34) is provided on the screen wiper drive device (12) carried by the supporting body (14).

7. Fixing device according to any of the preceding claims, **characterised in that** the third push-fit peg (34) positioned in a vertical plane, in relation to the windscreen (26) to be wiped, extends against this.

8. Fixing device according to any of the preceding claims, **characterised in that** one of both insertion openings allocated to the push-fit peg (30, 32) provided at the side on the supporting body (14) is formed as a slot (36) of which the greater width is in the direction towards the adjacent insertion opening (38).

9. Fixing device according to any of the preceding claims, **characterised in that** the insertion openings (36, 38, 40) are each provided in a rubber bush (46) attached,to the vehicle body.

## Revendications

1. Dispositif de fixation (10) pour un système d'essuie-glace pour véhicules automobiles, comprenant un corps de support (14) qui porte un dispositif d'entraînement d'essuie-glace (12) et qui est muni de deux éléments de fixation (30, 32) latéraux allongés, qui s'avancent en saillie sur le corps de support (14) dans la même direction transversalement aux arbres d'essuie-glace (20, 22) logés dans ce dernier et qui sont aptes à être amenés en prise chacun dans un trou de réception (36 ou 38) du côté carrosserie,
**caractérisé par** au moins un autre élément de fixation (34), qui est écarté de la ligne de liaison entre les deux éléments de fixation (30, 32), le troisième élément de fixation (34) s'étendant en formant un sommet par rapport au plan projeté entre les deux premiers éléments de fixation (30, 32) et en ce que tous les éléments de fixation sont des éléments à emboîter, en particulier des pivots d'emboîtement (30, 32, 34) pour former un assemblage emboîté sans vis entre le corps de support (14) et la carrosserie du véhicule.

2. Dispositif de fixation selon la revendication 1, **caractérisé en ce qu'**il est prévu trois éléments de fixation (30, 32, 34) situés au niveau des sommets d'un triangle.

3. Dispositif de fixation selon la revendication 1 ou 2, **caractérisé en ce qu'**un troisième élément de fixation (34) s'étend perpendiculairement aux premiers éléments de fixation (30, 32) prévus au niveau du corps de support (14).

4. Dispositif de fixation selon l'une quelconque des revendications précédentes, **caractérisé en ce que** les deux éléments de fixation (30, 32) sont agencés parallèlement l'un à l'autre.

5. Dispositif de fixation selon l'une quelconque des revendications précédentes, **caractérisé en ce que** le troisième pivot d'emboîtement (34) est prévu pratiquement au milieu entre les deux pivots d'emboîtement (30, 32) du côté du corps de support.

6. Dispositif de fixation selon l'une quelconque des revendications précédentes, **caractérisé en ce que** le troisième pivot d'emboîtement (34) est prévu au niveau du dispositif d'entraînement d'essuie-glace (12), qui repose sur le corps de support (14).

7. Dispositif de fixation selon l'une quelconque des revendications précédentes, **caractérisé en ce que** le troisième pivot d'emboîtement (34), situé dans un plan vertical par rapport au pare-brise (26) à essuyer, s'étend dans la direction opposée à celui-ci.

8. Dispositif de fixation selon l'une quelconque des revendications précédentes, **caractérisé en ce que** l'un des deux trous de réception, associés du côté carrosserie aux pivots d'emboîtement (30, 32), prévus latéralement sur le corps de support (14), est conçu sous forme de trou oblong (36), dont la plus grande largeur est orientée en direction du trou de réception (38) voisin.

9. Dispositif de fixation selon l'une quelconque des revendications précédentes, **caractérisé en ce que** les trous de réception (36, 38, 40) sont prévus chacun dans une douille en caoutchouc (46) fixe contre la carrosserie.
